# EUROPEAN PATENT APPLICATION

(11) **EP 4 836 173 A1**
(43) Date of publication of application: **04.11.2026**
(21) Application number: 25841405.1
(22) Date of filing: 15.07.2025
(51) Int. Cl.: H01M 50/538, H01M 50/528, H01M 10/04

(54) **CURRENT COLLECTING PLATE FOR CYLINDRICAL BATTERY**

(30) Priority: 15.07.2024 KR 20240092952
(71) Applicant: LG Energy Solution, Ltd., Seoul 07335 (KR)
(72) Inventor: PARK, Jeong Eon, Daejeon 34122 (KR); KIM, Minwoo, Daejeon 34122 (KR); SONG, Yongwook, Daejeon 34122 (KR)
(74) Representative: Goddar, Heinz J.
(86) International application number: PCT/KR2025/010320
(87) International publication number: WO 2026/019204

(57) **Abstract**

A current collector plate for electrically connecting a tab of an electrode assembly and a battery can includes a body; two or more tab connecting portions protruding radially outward from an outer circumference of the body with lower surfaces thereof configured to be connected to the tab, each of the two or more tab connecting portions being provided with one or more alignment holes; and a can connecting portion protruding radially outward from a portion of the outer circumference of the body other than where the two or more tab connecting portions protrudes, the can connecting portion being bent upward so as to be configured to be connected to the battery can.

## Description

### [TECHNICAL FIELD]

This application claims the benefit of priority based on Korean Patent Application No. 10-2024-0092952 filed on July 15, 2024, the entire content of which is expressly incorporated as a part of this specification.

The present invention relates to a current collector plate and a structure of a cylindrical battery including the same that electrically connects a battery can and an electrode assembly.

### [BACKGROUND ART]

Secondary batteries, which provide ease of application depending on the product group and have electrical characteristics such as high energy density, are widely applied not only to portable devices, but also to electric vehicles or hybrid vehicles driven by an electrical driving source.

These secondary batteries are attracting attention as a new energy source for improving ecofriendliness and energy efficiency, not only because they have the primary advantage of being able to dramatically reduce the use of fossil fuels, but also because they have the advantage of not generating any by-products due to energy use.

The types of secondary batteries widely used today include lithium ion batteries, lithium polymer batteries, nickel cadmium batteries, nickel hydrogen batteries and nickel zinc batteries. The operating voltage of these unit secondary battery cells, i.e. unit battery cells is approximately 2.5V to 4.2V. Therefore, when a higher output voltage is required, a battery pack is often constituted by connecting multiple battery cells in series. In addition, a battery pack is often constituted by connecting multiple battery cells in parallel according to the charge and discharge capacity required for the battery pack. Therefore, the number of battery cells included in a battery pack and the electrical connection structure may be selected in various ways depending on the required output voltage and/or charge and discharge capacity.

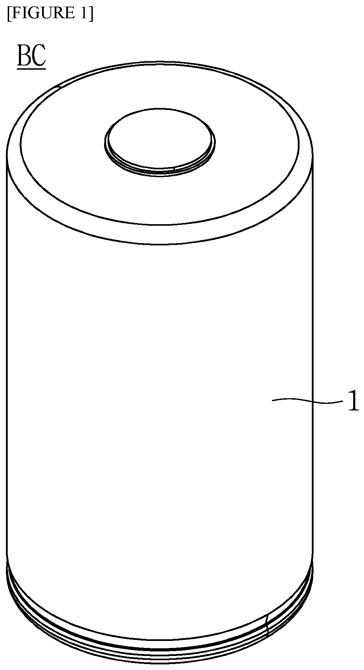

Meanwhile, known types of unit secondary battery cells include cylindrical, prismatic, and pouch-type battery cells. Referring to FIG. 1, a cylindrical battery cell BC is manufactured by housing an electrode assembly in a metal battery can 1. Here, the battery can 1 is electrically connected to the electrode assembly such that a portion of the surface thereof functions as a cathode or anode terminal.

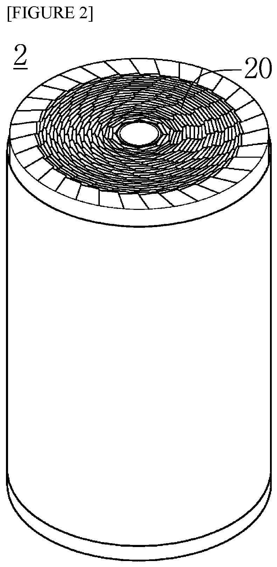

Referring to FIG. 2, a cylindrical battery cell BC typically includes a jelly-roll type electrode assembly 2, which is formed by alternately stacking anode plates and cathode plates with a separator interposed therebetween and then winding the same along a center axis. At the two axial ends of the electrode assembly 2, tabs 20 are formed by the protruding the ends of the anode plate and cathode plate without an active material coated thereon, and each tab 20 is electrically connected to the battery can 1 by being directly connected to the battery can 1 or by being connected to a terminal mounted on the battery can 1.

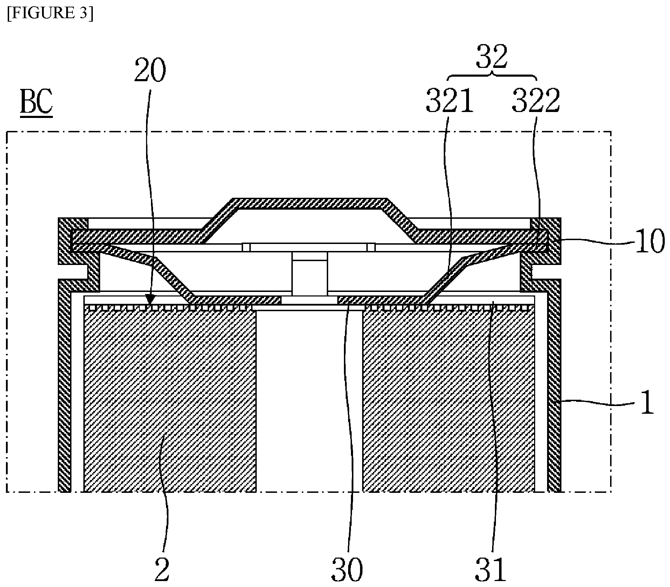

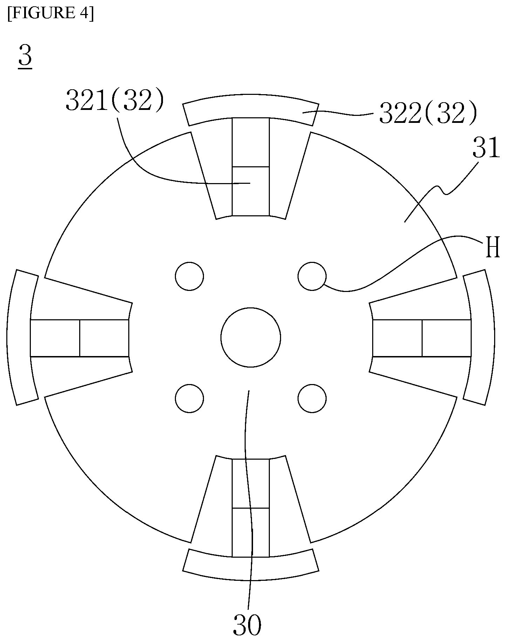

Here, as shown in FIG. 3, the electrode assembly 2 and the battery can 1 may be connected by a current collector plate 3 welded to a tab 20. Referring to FIG. 4, the current collector plate 3 typically includes a tab connecting portion 31 welded to the tab 20 of the electrode assembly 2, a can connecting portion 32 connected to the battery can 1, and a body 30 at the center from which each of the tab connecting portion 31 and the can connecting portion 32 protrudes.

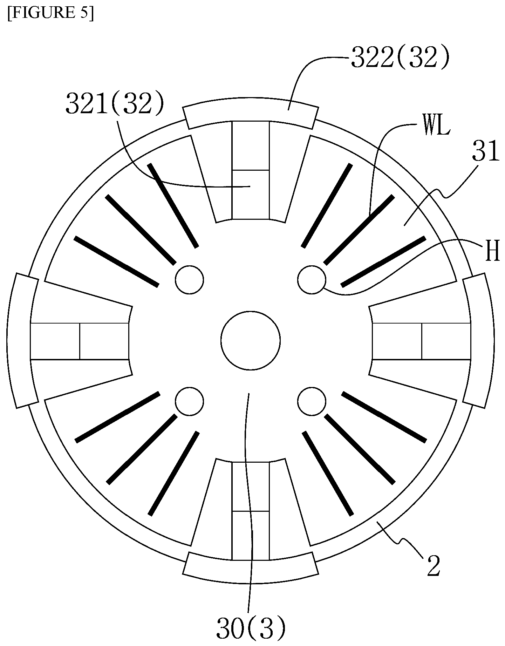

Referring to FIG. 5, the current collector plate 3 is provided with a plurality of alignment holes H arranged in the body 30 along the circumferential direction to ensure precise alignment with the electrode assembly 2. Alignment bars are inserted into the alignment holes H to ensure that the current collector plate 3 is properly aligned with the electrode assembly 2 and may be welded along the welding line WL.

Meanwhile, when the alignment holes H are provided in the body 30, the cross-sectional area of the current path between the tab connecting portion 31 and the can connecting portion 32 is reduced. In such case, the resistance of the current collector plate 3 is increased, which reduces the efficiency of the battery cell BC and increases heat generation.

In addition, since the alignment holes H are arranged between the body 30 and the tab connecting portion 31, the welding line WL is blocked by the alignment holes H and cannot extend sufficiently. In such case, there is also the problem of reduced welding strength between the current collector plate 3 and the electrode assembly 2, and increased current resistance.

### [DISCLOSURE]

### [TECHNICAL PROBLEM]

In order to solve above-described problems of the prior art, it is an object of the present invention to provide a current collector plate with reduced resistance and a structure of a battery cell including the same with increased efficiency.

It is also an object of the present invention to provide a structure of a current collector plate that prevents twisting or bending deformation and facilitates alignment with the electrode assembly.

It is also an object of the present invention to provide a structure of a current collector plate that may be precisely aligned with the electrode assembly and welded with high strength, and a structure of a battery cell in which the current collector plate is welded to the electrode assembly with high strength.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described problems, the present invention provides a structure of a current collector plate electrically for connecting a tab of an electrode assembly and a battery can, the current collector plate including: a body; two or more tab connecting portions protruding radially outward from an outer circumference of the body with lower surfaces thereof configured to be connected to the tab, each of the two or more tab connecting portions being provided with one or more alignment holes; and a can connecting portion protruding radially outward from a portion of the outer circumference of the body other than where the two or more tab connecting portions protrudes, the can connecting portion being bent upward so as to be configured to be connected to the battery can.

Here, each tab connecting portion of the two or more tab connecting portions includes a base defining a radially innermost boundary of each tab connecting portion disposed on the outer circumference of the body; a first edge defining one widthwise boundary of each tab connecting portion; and a second edge defining an opposite widthwise boundary of each tab connecting portion.

The alignment hole is provided to align the current collector plate with respect to the electrode assembly. Specifically, according to an embodiment, the current collector plate and the electrode assembly are welded with an alignment bar, which is at least temporarily fixed to the electrode assembly, inserted through the alignment hole such that the current collector plate may be welded to the electrode assembly with a proper alignment.

According to an aspect of the present invention, the one or more alignment holes are spaced apart from one of the first edge or the second edge by a predetermined distance in a widthwise direction, and the predetermined distance is equal to or greater than one half of a width of the base. According to this, due to the distance from the edge to the alignment hole, the tab connecting portion may easily resist twisting and bending in the circumferential direction, and as a result, the entire current collector plate may have better alignment, higher welding strength and resistance to deformation. In addition, since the area through which the welding line for welding the current collector plate and the electrode assembly passes becomes larger as the area between the edge and the alignment hole becomes larger, the welding strength between the current collector plate and the electrode assembly may be further improved.

It is preferable that three or more tab connecting portions are provided. When two or less tab connecting portions are provided, the current collector plate is likely to be twisted or lifted with respect to the alignment bar or the electrode assembly, resulting in problem of deformation, misalignment or reduced welding strength.

According to an embodiment of the present invention, each tab connecting portions may include a section having a width increasing radially outward. In addition, according to an embodiment of the present invention, an angle between the first edge and the second edge is equal to or greater than 0 degrees in each tab connecting portion. Accordingly, the alignment hole may be provided in a relatively wide area of the tab connecting portion, and securing the distance from the edge to the alignment hole is facilitated.

According to an embodiment of the present invention, one alignment hole is provided in each tab connecting portion. Here, it is preferable that the alignment hole is provided on a widthwise center line of the tab connecting portion. This is to symmetrically form the rigidity between the first edge and the alignment hole and the rigidity between the second edge and the alignment hole, and to secure the maximum average distance on both sides.

It is preferable that a width between the first edge and a tangent line passing through a widthwise center of the base and tangent to one or more alignment holes does not decrease radially outward. In addition, it is preferable that the angle between the edge and a tangent line passing through a widthwise center of the base and tangent to one or more alignment holes is equal to or greater than 0 degrees. Accordingly, the welding line between the current collector plate and the electrode assembly may be extended over a long area extending from the base to between the edge and the alignment hole.

The present invention also provides a structure of a battery cell including: a battery can; an electrode assembly accommodated in the battery can, the electrode assembly including a tab; and a current collector plate electrically connecting the battery can and the tab.

The current collector plate includes: a body; two or more tab connecting portions protruding radially outward from an outer circumference of the body with lower surfaces thereof connected to the tab, each of the two or more tab connecting portions being provided with one or more alignment holes; and a can connecting portion protruding radially outward from a portion of the outer circumference of the body other than where the two or more tab connecting portions protrudes, the can connecting portion being bent upward to be connected to the battery can.

Here, each tab connecting portion of the two or more tab connecting portions include a base defining a radially innermost boundary of each tab connecting portion disposed on the outer circumference of the body; a first edge defining one widthwise boundary of each tab connecting portion, and a second edge defining an opposite widthwise boundary of each o tab connecting portion.

According to another aspect of the present invention, the tab and the current collector plate are connected along a welding line, and the welding line includes: a first welding line extending from inside of the body to between the one or more alignment holes and the first edge; and a second welding line extending from the inside of the body to between the one or more alignment holes and the second edge.

According to the present invention, since the welding line extends from the inside of the body, through the base, and to between the edge and the alignment hole, the welding strength between the current collector plate and the electrode assembly may be significantly secured.

In addition, according to the present invention, since the alignment hole is provided in the tab connecting portion rather than in the body, the alignment hole is prevented from being positioned in the current transmission path between the tab connecting portion and the can connecting portion so as to be advantageous in providing a large cross-sectional area of the current path and low resistance.

The welding line may further include a third welding line extending from the inside of the body to a radially inner portion of one or more alignment holes. According to an embodiment of the present invention, for the third welding line to extend to have a sufficient length, it is important to ensure sufficient radial distance between the alignment hole and the base.

The alignment hole is provided to align the current collector plate with respect to the electrode assembly. Specifically, according to an embodiment, the current collector plate and the electrode assembly are welded with an alignment bar, which is at least temporarily fixed to the electrode assembly, inserted through the alignment hole such that the current collector plate may be welded to the electrode assembly with a proper alignment.

According to an embodiment of the present invention, the one or more alignment holes are spaced apart from the first edge by a predetermined distance in a widthwise direction, and the predetermined distance may be equal to or greater than one half of a width of the base. According to this, due to the distance from the edge to the alignment hole, the tab connecting portion may easily resist twisting and bending in the circumferential direction, and as a result, the entire current collector plate may have better alignment, higher welding strength and resistance to deformation. In addition, since the area through which the welding line for welding the current collector plate and the electrode assembly passes becomes larger as the area between the edge and the alignment hole becomes larger, the welding strength between the current collector plate and the electrode assembly may be further improved.

It is preferable that three or more tab connecting portions are provided. When two or less tab connecting portions are provided, the current collector plate is likely to be twisted or lifted with respect to the alignment bar or the electrode assembly, resulting in problem of deformation, misalignment or reduced welding strength.

According to an embodiment of the present invention, each tab connecting portion may include a section having a width increasing radially outward. In addition, according to an embodiment of the present invention, an angle between the first edge and the second edge is equal to or greater than 0 degrees in each tab connecting portion. Accordingly, the alignment hole may be provided in a relatively wide area of the tab connecting portion, and securing the distance from the edge to the alignment hole is facilitated.

According to an embodiment of the present invention, one alignment hole is provided in each tab connecting portion. Here, it is preferable that the alignment hole is provided on the widthwise center line of the tab connecting portion. This is to symmetrically form the rigidity between the first edge and the alignment hole and the rigidity between the second edge and the alignment hole, and to secure the maximum average distance on both sides.

It is preferable that a width between the first edge and a tangent line passing through a widthwise center of the base and tangent to one or more alignment holes does not decrease radially outward. In addition, it is preferable that the angle between the first edge and a tangent line passing through a widthwise center of the base and tangent to one or more alignment holes is equal to or greater than 0 degrees. Accordingly, the welding line between the current collector plate and the electrode assembly may be extended over a long area extending from the base to between the edge and the alignment hole.

### [ADVANTAGEOUS EFFECTS]

The present invention may provide a current collector plate with low current path resistance and a battery cell structure including the same with increased efficiency.

The present invention also provides a structure of a current collector plate wherein twisting or bending is prevented and alignment with the electrode assembly is facilitated.

The present invention also provides a structure of a current collector plate that may be precisely aligned and welded to the electrode assembly with high strength, and a structure of a battery cell in which the current collector plate is welded to the electrode assembly with high strength.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates a cylindrical battery cell.
FIG. 2 illustrates a jelly-roll type electrode assembly.
FIG. 3 illustrates an enlarged cross-sectional view of the battery cell of FIG. 1.
FIG. 4 illustrates a current collector plate included in the battery cell of FIG. 3.
FIG. 5 illustrates the current collector plate of FIG. 4 connected to the electrode assembly of FIG. 2.
FIG. 6 illustrates a battery cell according to an embodiment.
FIG. 7 illustrates an electrode assembly according to an embodiment.
FIGS. 8 and 9 illustrate a current collector plate according to an embodiment.
FIG. 10 illustrates an enlarged cross-sectional view of a battery cell according to an embodiment.
FIGS. 11 and 12 illustrate a positional relationship of alignment holes with respect to a body and tab connecting portions of a current collector plate according to an embodiment.
FIG. 13 illustrates a current collector plate welded to an electrode assembly according to an embodiment.

### [DESCRIPTION OF REFERENCE NUMERALS]

1: battery can
10: crimped portion
2: electrode assembly
20: tab
3: current collector plate
30: body
31: tab connecting portion
311: base
312: front end
313: edge
313a: first edge
313b: second edge
32: can connecting portion
321: leg
322: extension
BC: battery cell
H: alignment hole
WL1~3: first to third welding lines
C: center line
T: tangent line
W: width
G: distance

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled to," or "in contact with" another element, it should be understood that the element may be "directly connected to," "directly coupled to," or "directly in contact with" another element, or the element may be "connected to," "coupled to," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, preferred embodiments of the present invention will be described with reference to the accompanying drawings.

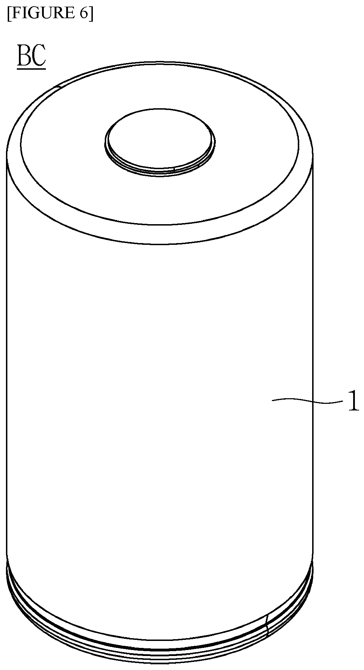

FIG. 6 illustrates a battery cell according to an embodiment. Referring to FIG. 6, a battery cell BC according to an embodiment of the present invention has a cylindrical shape. The battery cell BC is manufactured by accommodating an electrode assembly in a battery can 1 made of a conductive material. The electrode assembly includes anode and cathode tabs, and the anode and cathode tabs are electrically connected to one of the battery can 1 and a terminal mounted on and insulated from the battery can 1, respectively.

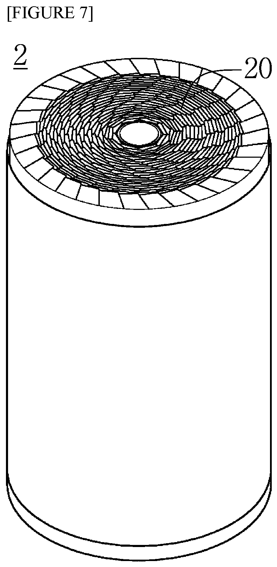

FIG. 7 illustrates an electrode assembly according to an embodiment. Referring to FIG. 7, the electrode assembly 2 may have a jelly-roll shape in which an anode plate and a cathode plate are alternately laminated and wound with a separator interposed therebetween. Specifically, the electrode assembly 2 has a cylindrical shape surrounding a hollow center extending along the center axis.

The anode plate and the cathode plate are coated with an anode active material and a cathode active material, respectively. At one axial end of the electrode assembly 2, an end of the anode plate without the active material is exposed, and at the opposite axial end, an end of the cathode plate without the active material is exposed. The ends of the anode plate and the cathode plate, respectively, exposed at the one axial end and the opposite axial end, respectively, constitute tabs 20. The tabs 20 may be connected to the battery can 1 or a terminal to electrically connect the electrode assembly 2 to the outside.

Meanwhile, the tab 20 of the electrode assembly 2 may not be directly connected to the battery can 1, but may be electrically connected to the battery can 1 through a current collector plate that is welded to the tab 20 and connected to the battery can 1.

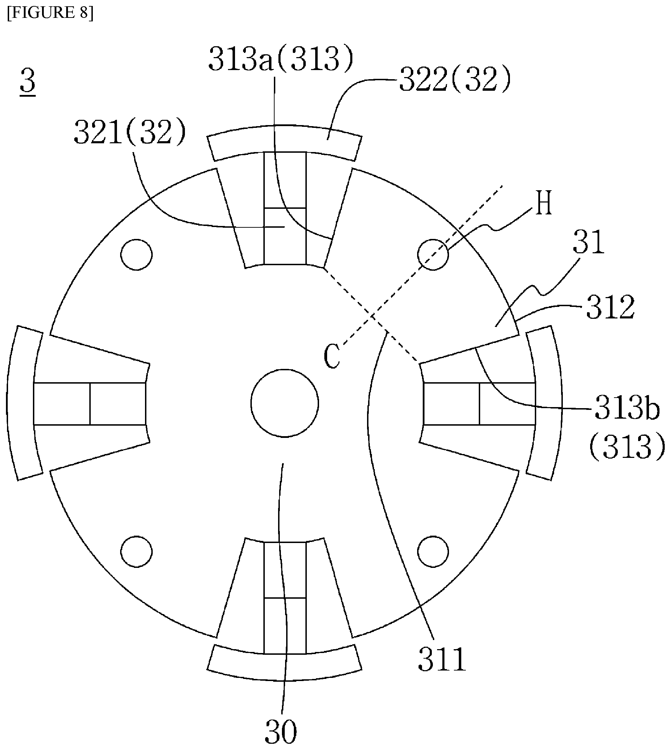

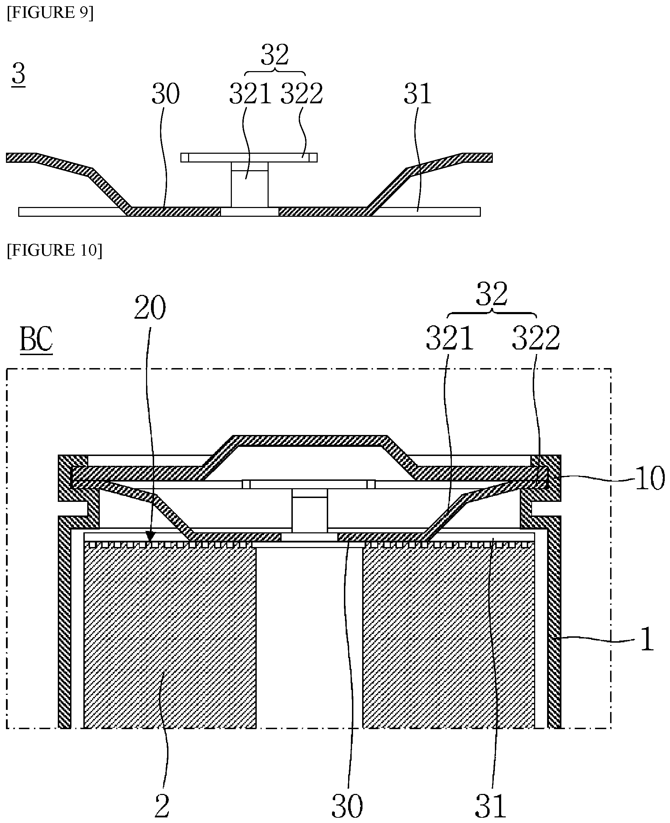

FIGS. 8 and 9 illustrate a current collector plate according to an embodiment. Referring to FIGS. 8 and 9, the current collector plate 3 according to an embodiment of the present invention is formed entirely of a conductive material and includes a body 30, a tab connecting portion 31 and a can connecting portion 32.

The body 30 is a plate having a thickness and may have a roughly circular shape. A hole corresponding to the hollow center of the electrode assembly 2 is provided at the center of the body 30 to serve as a main entrance for the electrolyte solution that impregnates the electrode assembly 2.

The tab connecting portion 31 protrudes radially outward from the body 30, and the lower surface thereof is welded to the tab 20 of the electrode assembly 2, thereby connecting the current collector plate 3 to the anode or cathode of the electrode assembly 2.

According to an embodiment of the present invention, in each of the two or more tab connecting portions 31, defined are: a base 311 defining a radially innermost boundary of each of the two or more tab connecting portions 31 and disposed on the outer circumference of the body 30; and an edge 313 including a first edge 313a defining one widthwise boundary of each of the two or more tab connecting portions 31 and a second edge 313b defining an opposite widthwise boundary of each of the two or more tab connecting portions 31.

Here, the radially outer boundary of the tab connecting portion 31 is defined as the front end 312. Specifically, the base 311 refers to a portion at an imaginary line connecting two ends of the tab connecting portion 31 where the tab connecting portion 31 begins to protrude from the body 30, and the edge 313 refers to a pair of ends connecting two ends of the base 311 and two ends of the front end 312, respectively. Accordingly, the tab connecting portion 31 is defined as an area surrounded by the edge 313, the base 311 and the front end 312.

Hereinafter, as well as throughout the specification, the widthwise direction of the tab connecting portion 31 refers to the direction in which the base 311 extends, that is, the extending direction of an imaginary straight line passing through two points where the tab connecting portion 31 begins to protrude from the body 30, and a direction parallel thereto.

According to an embodiment, each of the tab connecting portions 31 is provided with one or more alignment holes H. The alignment hole H is provided to align the current collector plate 3 with respect to the electrode assembly 2. Specifically, according to an embodiment, the current collector plate 3 and the electrode assembly 2 are welded with an alignment bar, which is at least temporarily fixed to the electrode assembly 2, inserted through the alignment hole H such that the current collector plate 3 may be welded to the electrode assembly 2 with a proper alignment.

It is preferable that three or more tab connecting portions are provided. When two or less tab connecting portions are provided, the current collector plate 3 is likely to be twisted or lifted with respect to the alignment bar or the electrode assembly 2, resulting in problem of deformation, misalignment or reduced welding strength. Specifically, according to an embodiment of the present invention, a total of four tab connecting portions 31 are provided in all directions.

According to an embodiment of the present invention, one alignment hole H may be provided in each of the tab connecting portions 31. Here, it is preferable that the alignment hole H is arranged in a manner that the center thereof is located on a widthwise center line C that vertically bisects the base 311. This is to symmetrically form the rigidity between the first edge 313a and the alignment hole H and the rigidity between the second edge 313b and the alignment hole, and to secure the maximum average distance on both sides.

The can connecting portion 32 may protrude radially outward from a portion of the body other than where the tab connecting portions protrude along the circumferential direction. The can connecting portion 32 may extend radially outward from the body 30 and may include an upwardly bent leg 321 and an extension 322 extending in two ways in the circumferential direction from the outer radial end of the leg 321 to be connected to the battery can 1.

FIG. 10 illustrates an enlarged cross-sectional view of a battery cell according to an embodiment. Referring to FIG. 10, the current collector plate 3 is disposed between one surface of the battery can 1 and one axial end of the electrode assembly 2. Here, the tab connecting portion 31 is welded to one tab 20 of the electrode assembly 2, and the can connecting portion 32 is mounted on the crimped portion 10 of the battery can 1 so as to electrically connect the battery can 1 to the electrode assembly 2.

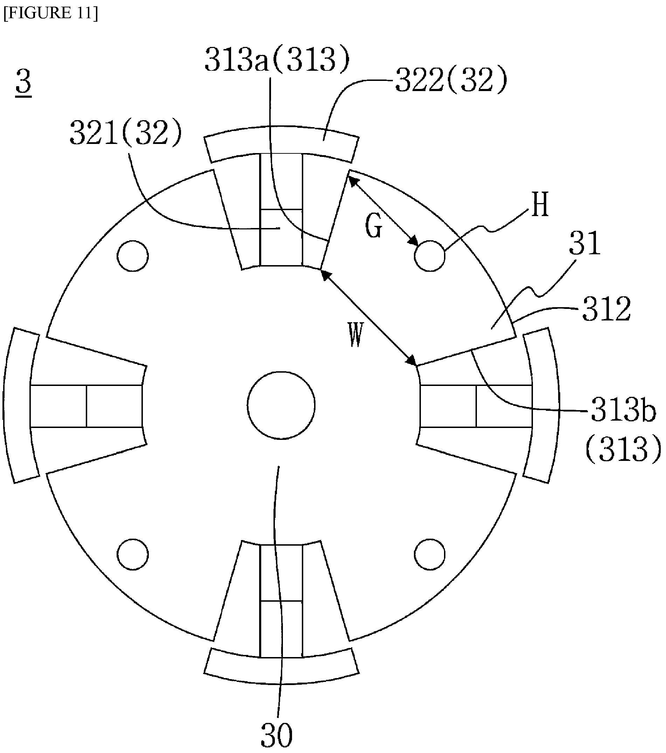

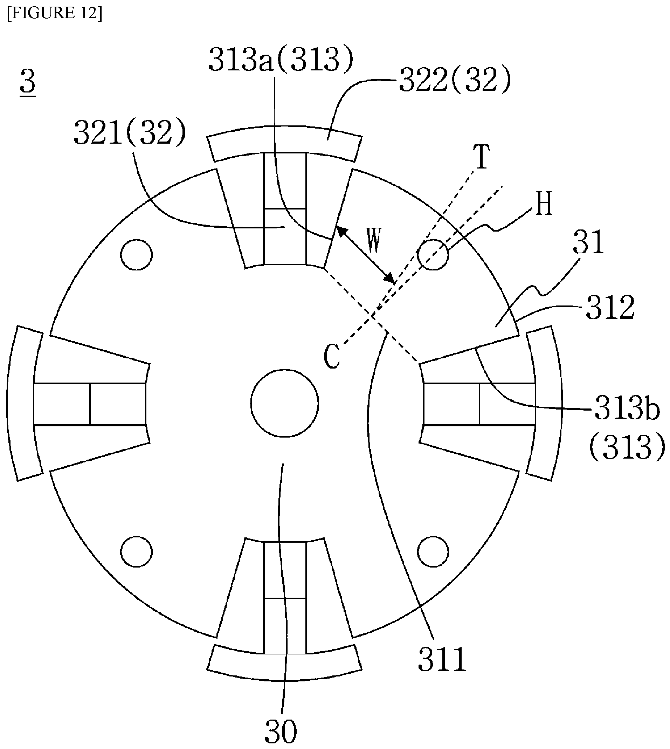

FIGS. 11 and 12 illustrate a positional relationship of alignment holes with respect to a body and tab connecting portions of a current collector plate according to an embodiment.

Referring first to FIG. 11, the one or more alignment holes H according to an embodiment of the present invention may be spaced apart from the edges 313 by a predetermined distance G in the widthwise direction.

Here, the predetermined distance may be equal to or greater than one half of the width W of the base 311. According to this, due to the distance from the edge 313 to the alignment hole, the tab connecting portion 31 may easily resist twisting and bending in the circumferential direction, and as a result, the entire current collector plate 3 may have better alignment, higher welding strength and resistance to deformation. In addition, since the area through which the welding line for welding the current collector plate 3 and the electrode assembly 2 passes becomes larger as the area between the edge 313 and the alignment hole H becomes larger, the welding strength between the current collector plate 3 and the electrode assembly 2 may be further improved.

Hereinafter as well as throughout the specification, a positive angle between two straight lines extending in the radial direction means that the two straight lines extend farther apart from each other along the radially outward direction with respect to the base 311.

According to an embodiment of the present invention, each of the two or more tab connecting portions 31 may include a section having a width increasing radially outward. In addition, according to an embodiment of the present invention, an angle between the first edge 313a and the second edge 313b is equal to or greater than 0 degrees in each of the two or more tab connecting portions 31. Accordingly, the alignment hole H may be provided in a relatively wide area of the tab connecting portion, and securing the distance from the edge 313 to the alignment hole H is facilitated.

Referring back to FIG. 11, it is preferable that the width W between: the tangent line T passing through the widthwise center of the base 311 and tangent to the alignment hole H; and the edge 313 does not decrease along the radially outward direction. In addition, as shown in FIG. 12, it is preferable that the angle between: the tangent line T passing through the widthwise center of the base 311 and tangent to the alignment hole H; and the edge 313 is equal to or greater than 0 degrees. Accordingly, the welding line between the current collector plate 3 and the electrode assembly 2 may be extended over an area extending from the base 311 to between the edge 313 and the alignment hole H.

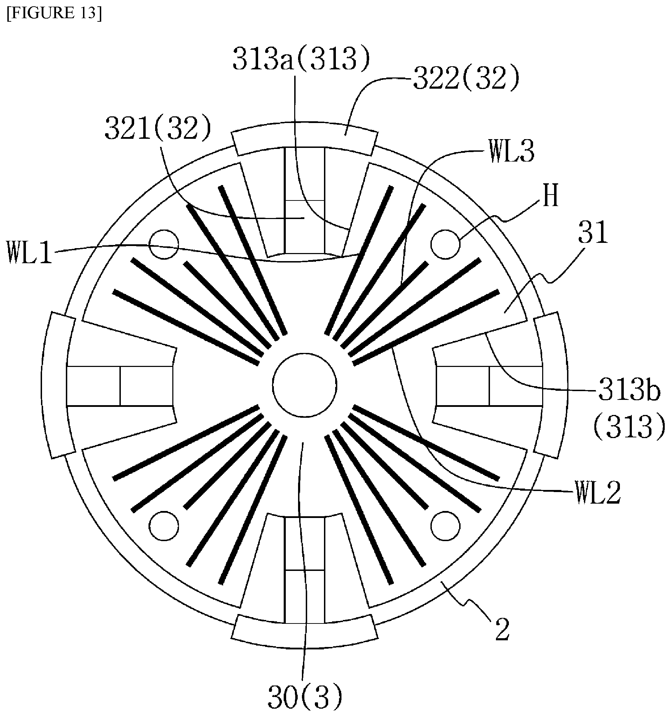

FIG. 13 illustrates a current collector plate connected to an electrode assembly according to an embodiment. Referring to FIG. 13, the tab 20 and the current collector plate 3 are welded along the welding line extending straight.

Here, the welding line includes: a first welding line WL1 extending from the inside of the body 30 to between the alignment hole H and the first edge 313a; and a second welding line WL2 extending from the inside of the body 30 to between the alignment hole H and the second edge 313b.

According to the present invention, since the welding lines WL1, WL2 and WL3 extend from the inside of the body 30, through the base 311, and to between the edge 313 and the alignment hole, the welding strength between the current collector plate 3 and the electrode assembly 2 may be significantly secured.

In addition, according to the present invention, since the alignment hole H is provided in the tab connecting portion 31 rather than in the body 30, the alignment hole H is prevented from being positioned in the current transmission path between the tab connecting portion 31 and the can connecting portion 32 so as to be advantageous in providing a large cross-sectional area of the current path and low resistance.

The welding line may further include a third welding line WL3 extending from the inside of the body 30 to the radially inner portion of one or more alignment holes H. According to an embodiment of the present invention, for the third welding line WL3 to extend to have a sufficient length, it is important to ensure sufficient radial distance between the alignment hole H and the base 311.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A current collector plate for electrically connecting a tab of an electrode assembly and a battery can, the current collector plate comprising:
a body;
two or more tab connecting portions protruding radially outward from an outer circumference of the body with lower surfaces thereof configured to be connected to the tab, each of the two or more tab connecting portions being provided with one or more alignment holes; and
a can connecting portion protruding radially outward from a portion of the outer circumference of the body other than where the two or more tab connecting portions protrudes, the can connecting portion being bent upward so as to be configured to be connected to the battery can,
wherein each tab connecting portion of the two or more tab connecting portions includes:
a base defining a radially innermost boundary of each tab connecting portion disposed on the outer circumference of the body;
a first edge defining one widthwise boundary of each tab connection portion; and
a second edge defining an opposite widthwise boundary of each tab connecting portion,
wherein the one or more alignment holes are spaced apart from one of the first edge or the second edge by a predetermined distance in a widthwise direction, and
wherein the predetermined distance is equal to or greater than one half of a width of the base.

2. The current collector plate of claim 1, wherein the two or more tab connecting portions includes three or more tab connecting portions.

3. The current collector plate of claim 1, wherein each tab connecting portion comprises a section having a width increasing along a radially outward direction.

4. The current collector plate of claim 1, wherein an angle between the first edge and the second edge is equal to or greater than 0 degrees in each tab connecting portion.

5. The current collector plate of claim 1, wherein the one or more alignment hole is one alignment hole provided in each tab connecting portion.

6. The current collector plate of claim 5, wherein the one alignment hole is provided on a widthwise center line of each tab connecting portion.

7. The current collector plate of claim 1, wherein a width between the first edge and a tangent line passing through a widthwise center of the base and tangent to the one or more alignment holes does not decrease along a radially outward direction.

8. The current collector plate of claim 1, wherein an angle between the first edge and a tangent line passing through a widthwise center of the base and tangent to the one or more alignment holes is equal to or greater than 0 degrees.

9. A battery cell comprising:
a battery can;
an electrode assembly accommodated in the battery can, the electrode assembly including a tab; and
a current collector plate electrically connecting the battery can and the tab,
wherein the current collector plate comprises:
a body;
two or more tab connecting portions protruding radially outward from an outer circumference of the body with lower surfaces thereof connected to the tab, each of the two or more tab connecting portions being provided with one or more alignment holes; and
a can connecting portion protruding radially outward from a portion of the outer circumference of the body other than where the two or more tab connecting portions protrudes, the can connecting portion being bent upward to be connected to the battery can,
wherein each tab connecting portion of the two or more tab connecting includes:
a base defining a radially innermost boundary of each tab connecting portion disposed on the outer circumference of the body;
a first edge defining one widthwise boundary of each tab connecting portion; and
a second edge defining an opposite widthwise boundary of each tab connecting portion,
wherein the tab and the current collector plate are connected along a welding line, and
wherein the welding line comprises:
a first welding line extending from inside of the body to between the one or more alignment holes and the first edge; and
a second welding line extending from the inside of the body to between the one or more alignment holes and the second edge.

10. The battery cell of claim 9, wherein the welding line further comprises a third welding line extending from the inside of the body to a radially inner portion of the one or more alignment holes.

11. The battery cell of claim 9, wherein the one or more alignment holes are spaced apart from the first edge by a predetermined distance in a widthwise direction, and
wherein the predetermined distance is equal to or greater than one half of a width of the base.

12. The battery cell of claim 9, wherein three or more tab connecting portions are provided.

13. The battery cell of claim 9, wherein each tab connecting portion comprises a section having a width increasing along a radially outward direction.

14. The battery cell of claim 9, wherein an angle between the first edge and the second edge is equal to or greater than 0 degrees in each tab connecting portion.

15. The battery cell of claim 9, wherein the one or more alignment holes is one alignment hole provided in each tab connecting portion.

16. The battery cell of claim 15, wherein the one alignment hole is provided on a widthwise center line of each tab connecting portion.

17. The battery cell of claim 9, wherein a width between the first edge and a tangent line passing through a widthwise center of the base and tangent to the one or more alignment holes does not decrease along a radially outward direction.

18. The battery cell of claim 9, wherein an angle between the first edge and a tangent line passing through a widthwise center of the base and tangent to the one or more alignment holes is equal to or greater than 0 degrees.
